# EUROPEAN PATENT SPECIFICATION

(11) **EP 2 406 113 B1**
(45) Date of publication and mention of the grant of the patent: **23.01.2013**
(21) Application number: 10722517.9
(22) Date of filing: 12.03.2010
(51) Int. Cl.: B60T 13/52, B60T 17/02

(54) **VACUUM RETENTION VALVE FOR BRAKE BOOSTER, BRAKE BOOSTER DEVICE AND AUTOMOTIVE VEHICLE**
VAKUUMRÜCKHALTEVENTIL FÜR EINEN BREMSKRAFTVERSTÄRKER, BREMSKRAFTVERSTÄRKUNGSVORRICHTUNG UND KRAFTFAHRZEUG
SOUPAPE DE MAINTIEN DE VIDE POUR AMPLIFICATEUR DE FREINAGE, DISPOSITIF D'AMPLIFICATION DE FREINAGE ET VÉHICULE AUTOMOBILE

(30) Priority: 12.03.2009 BR PI0900721
(43) Date of publication of application: 18.01.2012
(73) Proprietor: Volkswagen do Brasil Indústria de Veiculos Automotores Ltda., 09772-040 Sao Bernardo do Campo (BR)
(72) Inventor: HOHMANN, Kai, São Bernardo do Campo - SP (BR); L. ALMEIDA, Alexandre, São Bernardo do Campo - SP (BR); SINTRAM, Ulf, São Bernardo do Campo - SP (BR); BARANAUSKAS, Ricardo, São Bernardo do Campo - SP (BR)
(74) Representative: Legg, Cyrus James Grahame
(86) International application number: PCT/BR2010/000069
(87) International publication number: WO 2010/102367

(56) References cited:
- EP-A1- 0 115 254
- DE-A1-102006 023 599
- US-A1- 2004 237 923

## Description

The present invention refers to a vacuum retention valve for use in a brake booster device present in automotive vehicles, said valve being able to provide improvements in the operation of the brake booster system due to its short vacuum recovery time, essentially originating from the low internal loss of load.

In a cheap and efficient manner, the valve of the present invention solves the problems of supplying vacuum to the brake booster device that primarily affects cars with small engines equipped with peripheral consumer devices, such as air-conditioning and hydraulic steering systems.

The valve increases the generation of vacuum insofar as it is able to reduce the loss in yield of the brake booster to a minimum and lower its recovery time, thus increasing its efficiency and providing greater safety for the passengers of the automotive vehicle by allowing a safer and faster braking thereof, without a hardening of the brake pedal, independently of the working status of the engine.

The present invention also refers to a brake booster device having a vacuum retention valve described above.

The present invention further refers to an automotive vehicle having the aforementioned vacuum retention valve for use in brake booster devices.

### Description of the State of the Art

A system of vital importance in any means of transport is the brake system. In automotive vehicles, the brakes work by virtue of the attrition resulting from the contact between a non-rotary element of the automobile (brake pad or lining) and a disk or drum that turns with the wheel of the vehicle. The attrition generated produces the necessary force to reduce, or 30 even completely reduce to a stop, the speed of the automotive vehicle, converting the kinetic energy of the vehicle that moves into heat which dissipates in the air.

To increase the efficiency of the brake system, some assemblies resort to drums or disks with a greater surface contact. Alternatively, harder linings are applied in the drum brakes or harder pads on the disk brakes which, due to their greater hardness, withstand higher temperatures during braking, thus reducing the risk of failure. Although this alternative to improve the braking efficiency effectively increases the power of the brake system, the use of more rigid linings and pads, requires the vehicle driver to apply greater pressure on the brake pedal.

In most cars and commercial land road vehicles, the higher pressure needed to apply the brake pedal is obtained by assembling a brake booster mechanism that uses vacuum stored to multiply the locking force applied to the brake pedal, thus reducing the physical effort exerted by the driver during the action of braking the vehicle. In other words, with the brake booster mechanism, the vehicle driver applies a low intensity force to the brake pedal with his foot, and the brake booster increases the intensity of this force in activating the brake.

Said brake booster mechanism consists of a booster cylinder, where there is a plunger, or a diaphragm, which uses the partial vacuum (low pressure) created in the engine intake or in a generating pump (diesel engines) of the vehicle to raise the pressure applied to the brakes. In this mechanism, when the air is extracted from one of the ends of the cylinder and the atmospheric pressure is allowed in at the other end, the difference generated between the pressures existing on both sides of the plunger (or diaphragm) can be used to facilitate the application of the brakes, and is used therefore as a complement to the physical force exerted by the driver on the brake pedal.

Due to the changeable operating conditions during its working, the vehicle engine does not constantly produce the vacuum required to feed the brake booster mechanism. It is therefore necessary that said mechanism store the vacuum supplied, thereby guaranteeing that the brake booster assists the braking by reducing the force applied by the driver to the brake pedal even when the engine does not produce sufficient vacuum. Storage of vacuum in the brake booster is also necessary to ensure assistance in the force applied by the driver in a limited number of braking actions when the engine does not work or even when it abruptly stops working.

A way used to store the vacuum in the brake booster is by using vacuum retention valves which allow a volumetric flow of gases and liquids in just one flow direction. These valves are positioned between the suction opening of the engine and the brake booster chamber so as to ensure that the vacuum produced by the engine is retained in the brake booster device without letting the vacuum already stored escape.

At current levels of technology, the vacuum chamber retention valve is separated by a perforated wall. On one side of this wall is a rubber membrane, and the point of fixation of this membrane is generally located in the center thereof, so that its ends can move freely. The air coming from the side of the wall where the membrane is not located can flow through the perforation holes, since the free ends of the membrane rise from the perforated wall with the action of flow pressure. In the opposite direction of the flow, the pressure compresses the membrane against the divisory wall, making it cover the perforation and close the valve. This is why the valve commonly used by the automobile industry allows the volumetric flow in just one flow direction.

Although widely used, the valve described presents certain drawbacks. One such drawback is due to the fact that the membrane is, imperiously, in the yield flow, that it also can close in the reversal of the flow direction, resulting in turbulences which characterize a yield resistance. These turbulences generated are also reinforced by the perforated wall, such that the valve, in distinguishing terms, is equivalent to a butterfly-type valve which prevents the flow (the butterfly-type valve is also characterized by a large loss of load), such that it is not possible to use the total vacuum present in the suction opening in the brake booster chamber. The recovery period of the brake booster is increased due to the action of the butterfly valve, and this fact renders the device less efficient under extreme conditions.

Several documents describe alternatives for vacuum retention valves to be used in brake booster devices, where said valves seek to enable storage of the vacuum generated by the vehicle engine in an effective manner.

A first case is North American patent US 6.625.981. In this document, the air outlet of the ejector is connected to an intake pipe through a vacuum control valve, and the air inlet of the ejector is connected to an air cleaner. The vacuum control valve comprises a control chamber and a control piston, and the negative pressure of the system introduced into the control chamber acts on the control piston. When the negative pressure in the system is insufficient, the control piston acts, with the help of a spring, to open the valve and supply negative pressure from the ejector to the vacuum chamber. When the negative pressure in the system is raised, the control piston acts, with the help of the spring, to close the control valve and stop the operation of the ejector. The effect of the ejector with respect to the air /fuel ratio of the engine is thus reduced.

British document GB 2.263.954 describes a valve to control the brake which comprises a central portion with an outlet connected to the booster unit, an inlet connected to the engine, and a central spool. When working under the action of vacuum, there is a gradual reduction in pressure, moving the central spool so as to open spaces in the valve to the atmosphere. When the spaces are at atmospheric pressure, the spool returns to its original position thus recommencing the cycle. When there is not sufficient vacuum action, the system, comprising a ball associated to a spring, blocks the passage of air and thus the working of the spring.

Document DE 10 2006 023599 reveals an Otto internal combustion engine comprising an induction pipe in conjunction with the engine's cylinders, a brake servo unit, a flow connection for evacuating air from the brake servo unit to the induction pipe for the purpose of building up a vacuum inside the brake servo unit, in conjunction with which a Venturi unit is arranged in the flow connection to assist with the building up of the aforementioned vacuum. The flow connection comprises a bypass line having a lower flow resistance than the Venturi unit, the bypass line being intended to connect the evacuated air past the Venturi unit in the event of a transient vacuum in the induction pipe.

Although the technology revealed in such patent application has a certain degree of similarity when compared to the present invention, this prior art document does not reveal several important features/characteristics, like the existence of an assembly comprised of a cone and a corresponding seal ring.

Finally, document EP 115 254 reverts to a Fluid distribution circuit in a vacuum system for motor vehicles having a direct connection between the source and a vacuum servo device. Tn this device, a valve works at the reduced pressure available at the source and seals the connection between the source and a reservoir, when the reduced pressure available is less than a predetermined value. A diaphragm divides two chambers of a valve box. One chamber connects to the atmosphere and the other one to the source, while the diaphragm is worked elastically towards the atmospheric chamber and carries a rod working a valve between the second chamber and the reservoir.

Identically, such prior art document does not reveal several important features/characteristics, like the existence of an assembly comprised of a cone and a corresponding seal ring.

Therefore, although there are documents with alternatives for vacuum retention valves, the solutions presented herein demonstrate limitations in application and use, and they are unable to assure the rapid accumulation of vacuum necessary for use in the brake booster device due to the high loss of load, and simultaneously solve the problems existing in said device in a satisfactory and efficient manner and with the use of a valve that is cheap to manufacture and install in the vehicle.

The present invention presents a viable and efficient alternative for a vacuum retention valve, being cheap to build and easy to apply to brake booster devices. The valve of the present invention does not use springs that may wear and tear, losing their characteristics of elasticity after a certain pe-riod of use, nor perforated walls as commonly used in retention valves, thus avoiding the inconvenient turbulences described.

The vacuum retention valve described in the present invention uses a membrane system and provides a duct area for a complete flow. For this reason, the valve of the present invention resembles a smooth duct, reducing the loss in yield to a minimum and consequently also reducing, due to a low internal loss of load, the recovery time of the brake booster. Therefore, the present invention increases the efficiency of the brake booster device, thus guaranteeing greater safety for the vehicle passengers by allowing safe and faster braking thereof, without the occurrence of hardening of the brake pedal in any working status of the engine.

The use of the valve that is the object of the present invention can provide substantial improvements during the braking action for the driver of vehicles with small Otto engines and/or with low power for traction drive vehicles, because many of these present problems in supplying vacuum to the brake booster device as a result of the high potency peripheral consumers, such as air-conditioning and hydraulic steering, which require large throttle openings for most part of the functioning time.

The valve of the present invention can be used in any automotive vehicle which uses a brake booster device, as the invention can be installed in automobiles without the need for assembly alterations in said brake booster device present in the vehicle.

Since this is a simple system, easy to install and does not change the mode of functioning nor even the assembly of the brake booster device, the vacuum retention valve of the present invention can be sold separately as an accessory to equip already existing automotive vehicles and in circulation (aftermarket), improving its yield and decreasing the force exerted by the driver during the action of braking the vehicle.

### Objectives of the Invention

The objective of the present invention is to provide a vacuum retention valve which, in a cheap and efficient manner, is able to store vacuum for use in brake booster devices present in automotive vehicles, to provide substantial improvements in the brake booster system (as it has a short vacuum recovery time due to the low internal loss of load) and to solve the problems in the supply of vacuum for the brake booster device existing in small engines generated cars by the use of consumer peripherals.

The objective of the present invention is also to provide a brake booster device having a reduced recovery time between braking.

Further, the objective of the present invention is an automotive vehicle which has, in its brake system, the vacuum retention valve described in the invention, thus providing greater safety for the passengers.

### Brief Description of the Invention

The objectives of the present invention are achieved by means of a vacuum retention valve in brake booster devices of automotive vehicles, comprising a first outlet associated to an engine or reduced pressure-generating pump and a second outlet associated to the brake booster device, a chamber inside of which there is provided at least a membrane and a flow path travelled by the air coming from the brake booster, creating vacuum, a membrane located outside the flow path.

Furthermore, the objectives of the present invention are achieved by a brake booster device for an automotive vehicle comprising a vacuum retention valve such as defined in the prior paragraph, wherein the brake booster device has a reduced recovery time between braking.

Finally, the objectives of the present invention are achieved by means of an automotive vehicle comprising the vacuum retention valve described above.

### Summary Description of the Drawings

The present invention will now be described in greater detail based on an example of execution represented in the drawings:

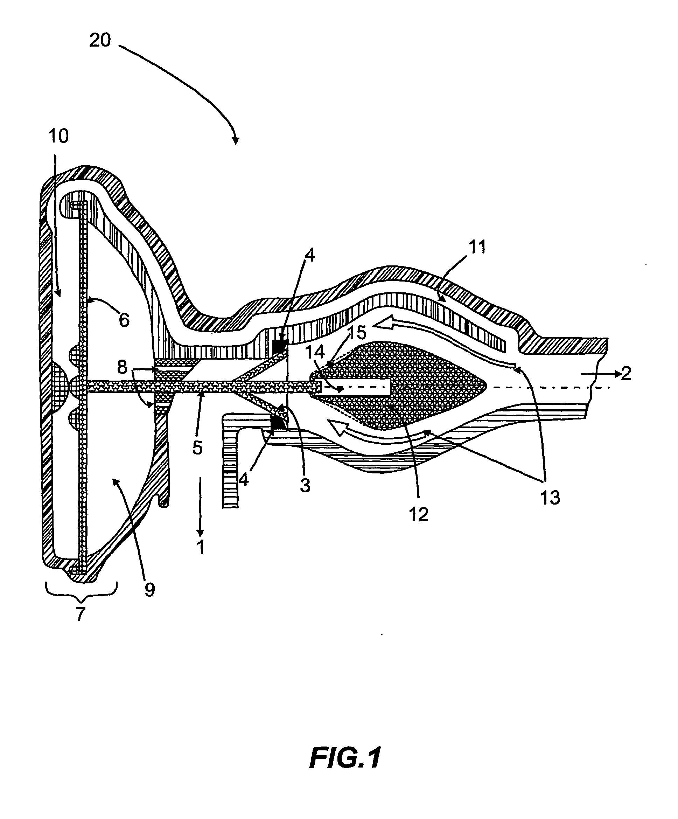

Figure 1 - is a cross-sectional view of the vacuum retention valve for a brake booster device present in an automotive vehicle, object of the present invention.

### Detailed Description of the Drawings

According to a preferred embodiment and as can be seen in - figure 1, the vacuum retention valve 20, object of the present invention, is idealized for positioning on the vacuum generation line which feeds the brake booster device, positioned between the brake booster device and the engine or a negative press-generating pump, and comprises a first outlet 1 associated to the engine/pump and a second outlet 2 associated to the brake booster. Between outlets 1 and 2, the valve 20 comprises a piping referred to herein as flow path 13, located so as to transport the air coming from the brake booster device through the outlet 2 to the engine by the outlet 1, generating the necessary vacuum to be stored for an effective working of the brake booster device.

The valve 20 also essentially comprises a membrane 6 located in a chamber 7 constituted and positioned such that the air, when transported by the flow path 13 of the brake booster towards the engine, does not come into contact with it. The membrane 6 is positioned such that its outer portion is fixed and its central portion moves freely in an axial direction. Alternatively, it is possible to create a part having two or more membranes 6, which act jointly or in a complementary manner.

In the same way, the membrane(s) 6 may be made of any necessary or desirable materials, provided that it is functional.

This arrangement of the valve 20 guarantees a lower loss of load by avoiding contact of the main air flow with the membrane 6 and the resulting turbulence, significantly increasing the efficiency of the brake booster device due to the shorter vacuum recovery time.

In a more detailed description of the preferred embodiment of the invention, the chamber 7 of the valve 20 is divided into two portions /halves by the membrane 6, the halves being called first chamber portion 9 and second chamber portion 10. The second portion 10 is linked to a bypass 11 which connects to the second outlet 2, such that pressure of the brake booster itself is transported by said bypass 11 and stored in the second portion 10.

The first portion 9 of the chamber 7 is connected to the first outlet 1, where the vacuum coming from the engine prevails, by means of at least a union bore 8.

The valve 20 also comprises a substantially elongated union rod 5, having a first end associated to the central portion of the membrane 6 (preferably being substantially perpendicular to said portion of the membrane) and a second end, opposite, associable to an insert 12 (preferably conical). Other elements are associated to the rod 5, as described ahead.

Preferably, the second end opposite the rod 5 moves axially inside a cavity or pocket 14, provided in the aforementioned conical insert 12.

The conical insert 12 is located axially inside the flow path 13, reducing the area of passage. Preferably, the flow path 13, in the region where the conical insert 12 is located, has a far greater diameter than the rest of its extension, such that it can condition it and also provide an area of passage similar to that existing in the rest of the part, but obviously its shape can vary freely, provided that it is functional.

Obviously, the insert 12 has an aerodynamically efficient shape (such as the shape of a drop) which minimizes the generation of turbulence and the loss of load. The preferred conical drop shape (see figure 1) was idealized so as to generate turbulences at negligible levels, but it can obviously vary freely without the resulting invention diverging from the scope of protection of the claims.

The working of the valve 20 is based on the movement of the membrane 6 inside the chamber 7. This movement derives from pressure variations existing in the chamber portions 9 and 10, which cause the axial movement of the central portion of the membrane 6, obviously towards the portion of the chamber 7 where the pressure is lower.

The axial movement of the central portion of the membrane 6 causes the axial movement of the rod 5, inside or outside the pocket 14. Preferably, when the pressure in the first chamber portion 9 assumes a value superior to that of pressure in the second chamber portion 10, the rod moves outside the pocket 14, and vice-versa.

For the correct working of the invention, the rod 5, in a position substantially adjacent to its second end, comprises a cone 3 cooperable to a sealing ring 4 (provided in the body of the valve), being selectively associable thereto (cone 3 and ring 4 can assume any necessary or desirable arrangement). With the axial movement of the rod 5, said cone 3 disengages from the ring 4 and engages to the fittings 15 located in the conical insert 12 (more precisely next to the pocket 14) and vice-versa.

The rod 5 and cone 3 combination should be kept as light and slim as possible so as to reduce to a minimum the behavior of the value to hysteresis and select the most reduced possible diameter of the membrane.

Preferably, when the pressure in the first chamber portion 9 assumes a value superior to that of the pressure in the second chamber portion 10 and the rod 5 moves outside the pocket 14, said cone 3 engages to the ring 4 and disengages from the fittings 15. When the pressure in the second chamber portion 10 supplants the value of the first chamber portion 9, the rod 5 moves inside the pocket 14 and the cone consequently disengages from the ring 4 and engages to the fittings 15.

When there is no vacuum stored or generated in the brake booster, the valve 20 is in rest position, in which the membrane 6 is in balance and the cone 3 moves against sealing ring 4.

When the engine or the negative pressure-generating pump begins producing vacuum, in a first moment it is unable to remove the air that is in the brake booster, since the cone 3 is still supported on the sealing ring 4, preventing the passage of air through the flow path 13.

By means of the union bores 8, the air in the first portion 9 of the chamber 7 begins to be drawn, reducing the pressure in that site. However, in the second chamber portion 10 there is no reduction in pressure, since the air present therein cannot be accessed (via bypass 11) because the cone 3 moves against ring 4 to block the passage. Hence, there is only a reduction in pressure of the first chamber portion 9.

Consequently the vacuum is greater in the portion 9 than in the portion 10 of the chamber 7. As the pressure in the portion 9 becomes considerably lower than in the portion 10, the central portion of the membrane 6 begins to be drawn inside the first portion 9, that is to say, it moves axially and causes the consequent linear movement of the rod. This linear movement of the rod moves its second end outside the pocket 14 and the cone 3 consequently disengages from the ring 4 and engages to the fittings 15. When the ring 4 engages completely to the fittings 15, the membrane 6 is in a position totally displaced towards the first chamber portion 9 and the movement of the rod 5 ceases.

With the membrane 6 in totally displaced status, the valve 20 is now in totally open status and the dome shape of this region allows the air coming from the brake booster through the outlet 2 to pass through the sides of the conical insert 12 through the flow path 13.

In this open status, the air can flow from the brake booster through the flow path 13, and at the same time the air located inside the bypass 11 is drawn and, consequently, so is the air located in the second chamber portion 10.

It is important to note that said open status happens once the diameter of the membrane 6 is greater in relation to the diameter of the cone 3. The diameters are proportional to the surface of the parts, which, under the pre-requirement of same differential pressure, lead to a same difference in forces acting upon the cone 3 and, in the opposite direction, in the membrane 6. Considering that the membrane 6 is much greater in area than the cone 3, and basically greater forces act in the present invention, the membrane 6 thus defines the position of the cone 3.

After the valve 20 remains open for a certain time, the pressure inside the brake booster tends to become equal to the negative pressure generated by the engine, and there also occurs an equalization of the pressure between the first and second chamber portions 9,10. At this point, the membrane 6, by elastic memory, tends to return to its rest position, moving the rod 5 outside the pocket 14 and the cone moves against the ring 4, closing the valve. In other words, under condition of same pressure in the brake booster and in the suction opening, the cone 3 is retreated by the very tension of the displaced membrane 6.

This situation generates a blockage in the flow of air coming from the brake booster and blocks the suction of the air from the second chamber portion 10. However, suction of the first chamber portion 9 continues through union bores 8 and, as soon as the pressure of the first chamber portion 9 is reduced again, the valve initially opens as described above.

In another situation, when the brake pedal is pressed, the vacuum stored in the brake booster is used to decrease the force applied to the pedal, and the air that entered into the brake booster tends to occupy all the available space (an increase in pressure occurs inside the brake booster). As a result, the air flows through the flow path 13 and reaches the second chamber portion 10 after passing through the bypass 11. Moments later, the pressure of the second chamber portion 10 increases consistently, but the pressure of the first chamber portion 9 continues reduced, since the suction through the union bores 8 never ceases. As a result, the central portion of the membrane 6 begins to be drawn inside the first portion 9, and the opening of the valve, as mentioned above, restarts.

It may also occur that the pressure inside the brake booster is very low (enough vacuum stored), and suddenly the vehicle driver accede-rates the engine pressing down hard on the accelerator pedal. In the case of the vast majority of Otto motorcycles, the butterfly-type valve of the accelerator opens, and the engine draws large volumes of ambient air, creating a situation in which the production of vacuum practically ceases.

In this situation, the pressure in the outlet 1 rises and the air begins to enter inside the first chamber portion 9 through the union bores 8. In moments, there is an increase in pressure inside the first chamber portion 9 in relation to the second chamber portion 10 and the central portion of the membrane 6 moves towards the second chamber portion 10 (the central portion of the membrane 6 begins to be drawn inside the second portion 10), moving the rod 5 outside the pocket 14. The cone 3 engages with the ring 4 and disengages from the fittings 15.

When the engine resumes generating vacuum, the valve resumes operating as mentioned above.

The present invention also provides a brake booster device of automotive vehicles having the vacuum retention valve 20 described above.

The present invention also discloses an automotive vehicle having the vacuum retention valve 20. In essence, the automotive vehicle comprises at least a brake booster device comprising at least a vacuum retention valve 20 as described above.

## Claims

1. Vacuum retention valve, comprising a first outlet (1) associated to an engine or reduced pressure-generating pump and a second outlet (2) associated to the brake booster device, a chamber (7) inside of which there is provided at least a membrane (6) and a flow path (13) travelled by the air coming from the brake booster, creating vacuum, wherein:
(i) the membrane (6) is located outside the flow path (13); and
(ii) an union rod (5) is provided having a first end associated to the central portion of the membrane (6) and a second opposite end, associable to an insert (12);
the valve being **characterized in that** the rod (5) comprises a cone (3) selectively associable to a sealing ring (4) and at least a fitting (15) located in the conical insert (12).

2. Retention valve according to claim 1, **characterized in that** the membrane (6) divides the chamber (7) into a first portion (9) with the prevailing vacuum coming from the engine and a second portion (10) in which the brake booster vacuum prevails.

3. Retention valve according to claim 2, **characterized in that** the vacuum builds up in the first portion (9) by way of at least a union bore (8) which connects the flow path (13) to the first portion (9) of the chamber (7).

4. Retention valve according to claim 1, **characterized in that** it comprises a bypass (11) which connects a second outlet (2) to the second portion (10) of the chamber (7).

5. Retention valve according to claim 1, 2, 3 or 4, **characterized in that** the valve is in closed position when the cone (3) is associated to the sealing ring (4).

6. Retention valve according to claim 1, 2, 3 or 4, **characterized in that** the valve is in open position when the cone (3) is engaged to the fitting (15).

7. Retention valve according to claim 6, **characterized in that** the valve in open position allows the air coming from the brake booster, through the second outlet (2), to pass through the sides of the conical insert (12) through the flow path (13) and through the first outlet (1).

8. Retention valve according to claim 7, **characterized in that** the difference in pressure between the first and the second portions (9 and 10) moves the membrane (6) correspondingly.

9. Retention valve according to claim 8, **characterized in that**, when the pressure in the second portion (10) is greater than in the first portion (9), the membrane (6) is diverted towards the first portion (9), carrying the union rod (5) towards the pocket (14) and unfastening the cone (3) of the sealing ring (4).

10. Vacuum retention valve according to claim 1, 2, 3 or 4, **characterized in that** the diameter of the membrane (6) is greater than the diameter of the cone (3).

11. Vacuum retention valve according to claim 1, 2, 3 or 4, **characterized in that**, under the condition of the same pressure in the brake booster and in the suction opening, the cone (3) is retreated by the very tension of the displaced membrane (6).

12. Brake booster device for an automotive vehicle, **characterized in that** it comprises a vacuum retention valve as defined in claims 1 to 11.

13. Automotive vehicle, **characterized in that** it comprises a vacuum retention valve as defined in claims 1 to 11.

## Patentansprüche

1. Vakuumrückhalteventil, welches einen ersten Ausgang (1), welcher einem Motor oder einer Pumpe mit reduzierter Druckerzeugung zugeordnet ist, und einen zweiten Ausgang (2), welcher der Bremskraftverstärkungsvorrichtung zugeordnet ist, enthält, wobei eine Kammer (7) im Inneren davon mit zumindest einer Membran (6) und einem Strömungspfad (13), durch welchen die Luft, welche vom Bremskraftverstärker kommt, durchläuft, bereitgestellt ist, wodurch ein Vakuum erzeugt wird, wobei:
(i) die Membran (6) außerhalb des Strömungspfads (13) positioniert ist; und
(ii) eine Verbindungsstange (5) bereitgestellt ist, welche ein erstes Ende, welches dem Mittenabschnitt von der Membran (6) zugeordnet ist, und ein zweites gegenüberliegendes Ende, welches einem Einlegeteil (12) zugeordnet ist, hat;
wobei das Ventil **dadurch gekennzeichnet ist, dass** die Stange (5) einen Kegel (3) enthält, welcher selektiv mit einem Dichtungsring (4) und zumindest einem Beschlag (15), welcher im konischen Einlegeteil (12) positioniert ist, in Zusammenhang bringbar ist.

2. Rückhalteventil nach Anspruch 1, **dadurch gekennzeichnet, dass** die Membran (6) die Kammer (7) in einen ersten Abschnitt (9) mit dem vom Motor kommenden vorherrschenden Vakuum, und einen zweiten Abschnitt (10), in welchem das Bremskraftverstärker-Vakuum vorherrscht, unterteilt.

3. Rückhalteventil nach Anspruch 2, **dadurch gekennzeichnet, dass** sich das Vakuum im ersten Abschnitt (9) mittels zumindest einer Verbindungsbohrung (8), welche den Strömungspfad (13) mit dem ersten Abschnitt (9) von der Kammer (7) verbindet, aufbaut.

4. Rückhalteventil nach Anspruch 1, **dadurch gekennzeichnet, dass** es eine Überbrückung (11) enthält, welche einen zweiten Ausgang (2) mit dem zweiten Abschnitt (10) von der Kammer (7) verbindet.

5. Rückhalteventil nach Anspruch 1, 2, 3 oder 4, **dadurch gekennzeichnet, dass** das Ventil in einer geschlossenen Position ist, wenn der Kegel (3) mit dem Dichtungsring (4) in Verbindung gebracht ist.

6. Rückhalteventil nach Anspruch 1, 2, 3 oder 4, **dadurch gekennzeichnet, dass** das Ventil in einer geöffneten Position ist, wenn der Kegel (3) mit dem Beschlag (15) in Eingriff steht.

7. Rückhalteventil nach Anspruch 6, **dadurch gekennzeichnet, dass** das Ventil in der geöffneten Position ermöglicht, dass die Luft über den zweiten Ausgang (2) vom Bremskraftverstärker kommt, um über die Seiten des konischen Einlegeteils (12) über den Strömungspfad (13) und über den ersten Ausgang (1) zu durchlaufen.

8. Rückhalteventil nach Anspruch 7, **dadurch gekennzeichnet, dass** die Druckdifferenz zwischen dem ersten und zweiten Abschnitt (9 und 10) die Membran (6) entsprechend bewegt.

9. Rückhalteventil nach Anspruch 8, **dadurch gekennzeichnet, dass**, wenn der Druck im zweiten Abschnitt (10) größer ist als im ersten Abschnitt (9), die Membran (6) in Richtung zum ersten Abschnitt (9) umgelenkt wird, wodurch die Verbindungsstange (5) in Richtung zur Tasche (14) bewegt wird und der Kegel (3) aus der Eingriffnahme mit dem Dichtungsring (4) gebracht wird.

10. Vakuumrückhalteventil nach Anspruch 1, 2, 3 oder 4, **dadurch gekennzeichnet, dass** der Durchmesser von der Membran (6) größer ist als der Durchmesser vom Kegel (3).

11. Vakuumrückhalteventil nach Anspruch 1, 2, 3 oder 4, **dadurch gekennzeichnet, dass** im Zustand des gleichen Drucks im Bremskraftverstärker und in der Saugöffnung, der Kegel (3) durch die starke Spannung von der umgelenkten Membran (6) zurückgezogen wird.

12. Bremskraftverstärkungsvorrichtung für ein Kraftfahrzeug, **dadurch gekennzeichnet, dass** sie ein Vakuumrückhalteventil nach einem der Ansprüche 1 bis 11 enthält.

13. Kraftfahrzeug, **dadurch gekennzeichnet, dass** es ein Vakuumrückhalteventil nach einem der Ansprüche 1 bis 11 enthält.

## Revendications

1. Soupape de maintien de vide, comprenant une première sortie (1) associée à un moteur ou à une pompe générant une pression réduite et une seconde sortie (2) associée au dispositif amplificateur de freinage, une chambre (7) à l'intérieur de laquelle est prévue au moins une membrane (6) et un chemin d'écoulement (13) parcouru par l'air provenant de l'amplificateur de freinage, en créant du vide, dans lequel :
(i) la membrane (6) est située en dehors du chemin d'écoulement (13) ; et
(ii) une tige d'union (5) est prévue ayant une première extrémité associée à la partie centrale de la membrane (6) et une seconde extrémité opposée pouvant être associée à un insert (12) ;
la soupape étant **caractérisée en ce que** la tige (5) comprend un cône (3) pouvant être sélectivement associé à une bague d'étanchéité (4) et au moins un ajustement (15) situé dans l'insert conique (12).

2. Soupape de maintien selon la revendication 1, **caractérisée en ce que** la membrane (6) divise la chambre (7) en une première partie (9) avec le vide dominant provenant du moteur et une seconde partie (10) dans laquelle le vide de l'amplificateur de freinage domine.

3. Soupape de maintien selon la revendication 2, **caractérisée en ce que** le vide augmente dans la première partie (9) au moyen d'au moins un alésage d'union (8) qui relie le chemin d'écoulement (13) à la première partie (9) de la chambre (7).

4. Soupape de maintien selon la revendication 1, **caractérisée en ce qu'**elle comprend une dérivation (11) qui relie une seconde sortie (2) à la seconde partie (10) de la chambre (7).

5. Soupape de maintien selon la revendication 1, 2, 3 ou 4, **caractérisée en ce que** la soupape est en position fermée lorsque le cône (3) est associé à la bague d'étanchéité (4).

6. Soupape de maintien selon la revendication 1, 2, 3 ou 4, **caractérisée en ce que** la soupape est en position ouverte lorsque le cône (3) est engagé dans l'ajustement (15).

7. Soupape de maintien selon la revendication 6, **caractérisée en ce que** la soupape en position ouverte permet à l'air provenant de l'amplificateur de freinage, à travers la seconde entrée (2), de traverser les côtés de l'insert conique (12) par le chemin d'écoulement (13) et la première sortie (1).

8. Soupape de maintien selon la revendication 7, **caractérisée en ce que** la différence de pression entre les première et seconde parties (9 et 10) déplace la membrane (6) de manière correspondante.

9. Soupape de maintien selon la revendication 8, **caractérisée en ce que**, lorsque la pression dans la seconde partie (10) est supérieure à celle dans la première partie (9), la membrane (6) est déviée vers la première partie (9), en amenant la tige d'union (5) vers la poche (14) et en détachant le cône (3) de la bague d'étanchéité (4).

10. Soupape de maintien de vide selon la revendication 1, 2, 3 ou 4, **caractérisée en ce que** le diamètre de la membrane (6) est supérieur au diamètre du cône (3).

11. Soupape de maintien de vide selon la revendication 1, 2, 3 ou 4, **caractérisée en ce que**, sous la condition de même pression dans l'amplificateur de freinage et dans l'ouverture d'aspiration, le cône (3) est reculé par la seule tension de la membrane déplacée (6).

12. Dispositif amplificateur de freinage pour un véhicule automatique, **caractérisé en ce qu'**il comprend une soupape de maintien de vide telle que définie dans les revendications 1 à 11.

13. Véhicule automobile, **caractérisé en ce qu'**il comprend une soupape de maintien de vide telle que définie dans les revendications 1 à 11.
